# EUROPEAN PATENT APPLICATION

(11) **EP 0 869 159 A1**
(43) Date of publication of application: **07.10.1998**
(21) Application number: 97200959.1
(22) Date of filing: 01.04.1997
(51) Int. Cl.: C09D 7/12, C09D 189/00

(54) **Paint formulations comprising proteinaceous material**

(71) Applicant: Instituut voor Agrotechnologisch Onderzoek (ATODLO), NL-6708 PD Wageningen (NL)
(72) Inventor: de Graaf, Leontine Anna, 5346 VS Oss (NL); Kolster, Peter, 6711 KA Ede (NL)
(74) Representative: Smulders, Theodorus A.H.J., Ir.

(57) **Abstract**

The present invention relates to a process for the preparation of a scratch resistant paint formulation, comprising combining a resinous binder, proteinaceous material, conventional additives and a solvent, and dispersing the combination obtained. In a further aspect, the present invention relates to the use of proteinaceous material for increasing the scratch resistance of paint films. In yet another aspect, the present invention relates to the use of proteinaceous material for adjusting, and preferably prolonging, the open time of a paint formulation film.

## Description

The present invention relates to the field of liquid paint formulations which comprise proteinaceous material. Liquid paint formulations are composed of a resin or binder and a volatile dispersion medium (solvent or non-solvent). In the following the dispersion medium will be referred to as the "solvent". These formulations can contain additives such as pigments and fillers. In that case, a suspension of finely divided pigment and filler particles is formed in a liquid binder system. The volatile solvent evaporates from the drying film after application, while the binder holds the pigment in the dry film and causes it to adhere to the substrate.

In this description and the appending claims, the term "paint" also encompasses lacquers, varnishes and spars, or similar coatings for all kinds of substrates. More in particular, such coatings can be applied on paper, wood, metal, glass, plastic, stone, concrete and so on.

"Resin" or "binder" is defined herein as linear, branched or (partly) crosslinked oligomers or polymers.

Roughly, paint formulations can be subdivided in organic solvent containing systems and water-based systems.

Of the organic solvent containing systems, an important part is formed by alkyd formulations, which comprise synthetic resins made from fatty acids or fatty oils, polybasic acids and polyhydric alcohols.

In a preferred embodiment, the present invention relates to water-based paint compositions, including latexes and polyacrylate type compositions. Such compositions use water as volatile solvent or dispersion medium. Water tends to evaporate rapidly from drying paint films. This makes that application of the paint, e.g., by using a brush, may rather easily leave marks. In the art, it is said that water-based paints generally have short open times. To solve this problem, it is proposed to add more slowly evaporating additives, e.g. glycols, to the aqueous phase. Such additives maintain the film open for a prolonged time.

In accordance with the present invention, it has now been found that proteinaceous material can be used to influence the drying time of paint formulations and to adjust the open time of paint formulations. The term "open time" is defined as the period of time wherein an applied paint layer is fluid enough to make a stripeless touch up.

In addition, it has been found that the scratch resistance of paint coatings can be improved by the incorporation of proteinaceous material in the paint formulation.

The present invention, hence, relates to a process for the preparation of a scratch resistant paint formulation, and/or formulation having an improved open time or drying time, comprising combining a resinous binder, proteinaceous material, conventional additives and a solvent, and dispersing the combination obtained. The term "proteinaceous material" comprises polymers essentially consisting of amino acid residues. This broad definition encompasses natural proteins as well as processed or modified proteins that may have modified characteristics, e.g., different solubilities or viscosities, such as partially hydrolyzed proteins, denaturated proteins or proteins containing certain substituents, as well as synthetic polypeptides and synthetic oligopeptides, comprised of one or more types of amino acids. The advantage of synthetic oligomers and polymers is that such materials can have a very high purity.

In essence, all available proteins, optionally after chemical, enzymatical and/or physical modification, can be used in the paint formulations prepared in accordance with the present invention. Generally, however, only industrial proteins are used. Industrial proteins are proteins which are available on a kiloton scale. Examples are wheat gluten, corn gluten, soy proteins, casein, collagen, gelatin, keratin and whey proteins, as well as derivatives of these proteins.

The various proteins differ from each other in functional properties such as water solubility, film forming properties, adhesion, emulsifying and foaming properties. Further, the various proteins differ in price. The person skilled in the art will primarily take into account both the inherent properties of the proteins and their price in order to find an economical interesting protein source.

Since proteins are built up from many different reactive amino acids e.g. containing (pending) amino, carboxylic, hydroxyl, amide, mercapto moieties, there are many possibilities to adjust the functional properties of a protein to the demands of an application by means of chemical and/or enzymatic modifications. Examples of chemical modification reactions include reaction with anhydrides, ethylene imine, acid chloride/aldehyde, diamine/carbodiimide, as well as deamidation, esterification and thiolation reactions. These reactions and the reaction conditions are known to the skilled person. The solubility of a protein will increase if charged groups are incorporated. This can for example be achieved during a deamidation reation in which asparagine and glutamine (amide residues) are being transferred into respectively aspartic and glutamic acid. In wheat gluten the amount of asparagine and glutamine is about 40%, so for this protein deamidation is very efficient to increase the water solubility and the stability of the dispersion/solution. In addition to deamidation also succinylation, hydrolysis and the attachment of hydrophilic groups (amino, hydroxyl) increase the solubility.

In contrast with making a protein more hydrophilic, incorporation of hydrophobic groups can make a protein more lipophilic. Commercially available reagents exist which contain both an alkyl/branched alkyl segment which differs in chain length (generally ranging from C₆-C₂₀, although longer and shorter chains are possible) and a reactive group, e.g. acid, acid chloride, sulfonyl chloride, aldehyde or epoxide.

Another route to hydrophobize proteins is to polymerize (hydrophilic, charged or hydrophobic) monomers (e.g. acrylics) to the protein backbone, resulting in a polymer grafted to the protein. The grafted product can be the desired by-product in the (emulsion) polymerization of monomers onto or in the presence of proteins. The reactions and reaction conditions are known to the skilled person. Moreover, proteins can be coupled to a polymer by first blending the protein and the binder, followed by a chemical or physical attachment of the synthetic binder to the protein.

The scratch resistance of the paint coatings appears to be importantly increased when at least 2 wt.%, preferably at least 5 wt.%, more preferably at least 10 wt.%; and most preferably at least 20 wt.% of the resinous binder is replaced by proteinaceous material. Hence, the weight ratio of resinous binder to proteinaceous material is between 1/99 and 95/5.

Generally, the proteinaceous material is added in an amount of between 1 and 20 wt.% drawn to the weight of the total composition.

The solvent system used in the paint formulations prepared in accordance with the present invention can be an aqueous system, an organic solvent, or a mixture of solvents.

In a preferred embodiment, the resinous binder is of the polyacrylate type. Resinous binders of this type encompass (meth)acrylates, (meth)acrylics, acrylic resins, and various random, alternating, block or tapered copolymers and interpolymers containing (meth) acryl monomers.

However, other types of resinous binders, inclusive of alkyd resins, and other polymers based on copolymerizable vinyl monomers, such as vinylaryl substances, nitriles and/or dienes, can be used in combination with the proteinaceous material as well.

Polyacrylate homo-, co- and interpolymers are used in the coating industry on a large scale, for instance as binder in water-based paint and ink formulations. good resistancy to water and organic solvents, and a sufficient weather resistance. However, polyacrylate coatings have two well-recognized imperfections, which make that painters still prefer to apply alkyd resin containing, commonly organic solvent based, paint formulations. Acrylate resin containing formulations have a short open time as compared with alkyd resin containing compositions; and acrylate containing formulations give coatings having a relatively low scratch resistance, esp. when compared with polyurethane resin containing formulations.

A general formulation of protein containing paint formulations based on total formulation weight may comprise
5-80 wt.%, preferably 20-40 wt.% of a binder;
1-30 wt.%, preferably 1-10 wt.% of protein;
0-60 wt.%, preferably 0-50 wt.% additives e.g. pigments and fillers;
0.2-20 wt.%, preferably 0.5-10 wt.% processing aids, such as stabilizers, wetting agents, preservatives, plasticizers for binder and protein; and
20-80 wt.%, preferably 20-50 wt.% solvent.

In another aspect, the present invention relates to the use of proteinaceous material for increasing the scratch resistance of paint films. Scratch resistance is a very important characteristic of paint formulations, for instance and especially for wood lacquers, floor polishes, car top coatings, furniture coatings, overprint varnishes and do-it-yourself paints. In these embodiments, it is preferred that the proteinaceous material has a good film-forming capacity in the solvent system or dispersion medium used.

Compared with known paint formulations, especially good results are obtained for water-based paint formulations. However, improved scratch resistance can be obtained in organic solvent systems and/or high solids compositions, as well.

In the solvent system used, the proteinaceous material preferably forms good films to give improvements in scratch resistance. This film forming activity is dependent on the protein material used in combination with the solvent system used. It is important for a good, uniform scratch resistance that the proteinaceous material is well-soluble or well-dispersible in the (solvent system of the) paint formulation. The proteinaceous material can be modified, derivatized or mixed with other proteins to obtain a good film forming capacity in the paint formulation, while, if needed, surfactants can be added to obtain a good solubility/dispersibility.

It is also possible to couple proteins used and the polymers, e.g. by grafting monomers onto the protein, or by reaction of the protein with the polymer binder.

Moreover, it may be suitable to add plasticizers for the proteinaceous material and/or the resinous binder. Useful plasticizers are e.g. glycerols for the proteinaceous material, and e.g. butylglycol acrylate resins.

As indicated herein-above, the present invention is also directed to the use of proteinaceous material for adjusting, and preferably prolonging, the open time of a paint formulation film. Without being wished to be bound to a certain theory, it is assumed that the open time of paint formulations is regulated or controlled by the swelling behaviour or solvent absorption of the proteinaceous material and, to a lesser extent, the binder material. In fact, the amount of proteinaceous material suitably be used in the formulations of the inventions to obtain the effects found in accordance with this invention, is governed by the possibility to absorb solvent.

In accordance with the present invention, it has been found that the drying time of paint formulations, esp. of water-based formulations, can increase considerably, e.g. up to 400%, dependent on the type of protein, the percentage of protein and the modification of the protein, of course in combination with the solvent system used.

Possible effects of the protein on the film appearance, the water resistance of the coating (as tested for instance by means of a water spottest) and other coating properties can be compensated by use of (preferably chemical) modifications of the protein such as hydrophilization and hydrophobization or crosslinking of the protein molecules. The reactions and reaction conditions are known to the skilled person.

The concepts "drying time" and "open time" are related; however, it cannot be said that the relation between these terms is directly proportional. The relation depends on the nature of the protein and the binder, and may depend on the solvent system used.

In the paint formulations of the present invention, conventional additives can be present. These additives may be pigments (both inorganic and organic), and binders. The pigment confers the hiding (covering) and coloring power of the paint. Normally, it also contributes to the durability of dry film.

The present invention will be illustrated more in detail, while referring to the following, non-limiting examples. In the examples, percentages are percentages by weight, unless otherwise indicated.

Introduction to the examples: Preparation of acrylate polymer and protein containing formulations.

In the following examples, all non-pigmented applied formulations had a total solids content of 20 wt.%, that is 20 g solid material in 80 mL of water. In practice, higher solids contents will be preferred and be possible. Dispersions or solutions containing only protein were prepared by slowly adding 20 g of proteinaceous material to 80 mL water (preferably demineralized) under vigorous stirring, using a sieve to improve dispersability of non-water soluble proteins (see in this respect NL A 9201805, and EP-A-0 593 123). To obtain 20% acrylate dispersions, commercial products were diluted to obtain the desired concentration. All dispersions in these examples were prepared at pH 8.

When combinations of acrylates and proteins were used, either solid protein or a protein solution were added to a diluted acrylate dispersion. For instance, a formulation containing 80% acrylate and 20% protein on solids basis, was prepared by addition of 2 g protein to a dispersion of 8 g acrylate binder in 79.6 mL water. Subsequently, 0.4 g glycerol was added as plasticizer for protein. If necessary, butylglycol was added as a plasticizer for the acrylate binder. The formulations were used 24 hours after preparation and applied on selected substrates.

### Application

Films were applied by means of a doctor blade or a wire bar. Film thickness of the applied wet films ranged from 30 µm up to 300 µm. Films were conditioned for 24 hours at 52°C before characterization.

Substrates: Films were applied on Leneta 2-C opacity testcards and on glass substrates.

### Characterizations

Film appearance: 100 µm wet film on Leneta 2-C opacity testcard. The coating should form a film (no cracks) and be transparent on both coated and uncoated surface of testcard.

Drying time: A 30 µm wet film was applied on Leneta testcard by a doctor blade. All dispersion had equal solid contents. The time needed to dry the complete film was measured as the drying time. All measurements were carried out in three-fold. The normalized drying time is defined as the drying time of the protein/acrylate dispersion divided by the drying time of the neat acrylate dispersion (equal solids content).

Scratch resistance: Films of 100 µm wet thickness on Leneta 2-C opacity testcard were dried and tested after first conditioning at 52°C (24 hours) and subsequently at 23°C/60% RH (24 hours) and judged by nail scratching. The resulting gloss difference and surface damage were judged. High scratch resistance was denoted as 5, low scratch resistance as 1.

The following resins and proteins have been used in the examples.

### Resins:

Joncryl 8300 (SC Johnson Polymers)
SCX 8085 (SC Johnson Polymers)
SCX 8222 (SC Johnson Polymers)
XK55 (Zeneca Resins)

### Proteins

Soluble wheat protein (SWP, Amylum)
Soy L (Unisol)
Casein (DMV Campina)
Gelatin (Sanovi)

### Example 1

Example 1 shows the influence of the type of protein on the drying time of Joncryl 8300 after addition of 10 wt.% protein based on acrylate binder. By variation of the protein (equal weight percentage in all formulations), a large variation in drying time could be obtained. A film with the highest transparency was formed with gelatin.

| Joncryl 8300 | |
|---|---|
| | Normalized drying time |
| No protein | 1 |
| 10% soy (w/w) | 1.1 |
| 10% gelatin (w/w) | 1.4 |
| 10% SWP (w/w) | 2.5 |

### Example 2

Example 2 shows the influence of the type of protein on the drying time of SCX 8085. Drying time depends both on the type of acrylate resin (compare with example 1) and on the protein type. SWP and casein films had very good film appearance, showing smooth, transparent films containing no cracks.

| SCX 8085 | |
|---|---|
| | Normalized drying time |
| No protein | 1 |
| 10% SWP | 1.1 |
| 10% soy | 1.2 |
| 10% casein | 2.3 |

### Example 3

The influence of the protein content on drying time of Joncryl 8300 is shown in Example 3. After addition of only 10% protein, an increase of 140 and 250% can be obtained with gelatin and SWP, respectively. In the case of gelatin, at all protein concentrations transparent films were formed. SWP films containing 10 wt.% protein had a good film appearance, films containing 50 wt.% SWP were slightly hazy.

| Joncryl 8300 | | |
|---|---|---|
| % protein | Normalized drying time | |
| | Gelatin | SWP |
| 0 | 1 | 1 |
| 10 | 1.4 | 2.5 |
| 50 | 4 | 4.5 |
| 100 | 4.8 | 4.7 |

### Example 4

The influence of the protein content on the drying time of XK55 is shown in Example 4. Both soy and casein increase the drying time by >200% upon addition of 10 wt.% or more protein. Casein containing films were transparent at all protein concentrations.

| XK 55 | | |
|---|---|---|
| % protein | Normalized drying time | |
| | Soy | Casein |
| 0 | 1 | 1 |
| 10 | 2.8 | 2.9 |
| 20 | 4.1 | 5.9 |
| 100 | 5.4 | 7.4 |

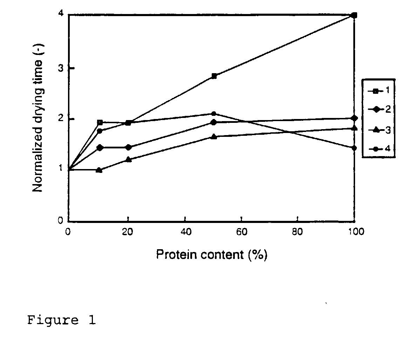

In Figure 1, the drying time test date of the results of examples 1-4 are shown.

### Example 5

Example 5 shows the influence of modification of casein (attachment of polar amine groups) on the drying time of SCX 8222. The incorporation of additional functional groups to the protein creates the possibility to perform subsequent reactions such as crosslinking. Thereby, coating properties can be varied and improved if necessary. Attachment of polar groups increases the drying time of the protein solution, and of the protein/acrylate blend.

| SCX-8222/casein modification | | |
|---|---|---|
| % protein | Normalized drying time | |
| | Non-modified | modified |
| 0 | 1 | 1 |
| 10 | 1.2 | 1.3 |
| 50 | 1.8 | 2.0 |
| 100 | 4.6 | 5.4 |

### Example 6

The influence of the binder type in a paint formulation on both the drying time and scratch resistance is shown in Example 6. The paint formulation contained 48 wt.% binder and 50 wt.% pigments.

The scratch resistance of the dry films increases significantly if the synthetic binder is completely replaced by the (non-modified) casein binder in exactly the same formulation. The drying time is not affected if casein is used. Thus, it is possible to adjust the scratch resistance independently of the drying time.

| Binder | Normalized drying time | Scratch resistance |
|---|---|---|
| SCX-8222 | 1 | 3 |
| casein | 1 | 4-5 |
| 1-5; 1 is low scratch resistance, 5 is high scratch resistance. | | |

### Example 7

The influence of SWP and casein content on scratch resistance of Joncryl 8300 is shown in Example 7. Protein coatings have a higher scratch resistance than acrylate coatings. Upon addition of ≥ 5 wt.% protein to acrylates, the scratch resistance increases. Casein containing acrylate films appear homogeneous at all compositions. Due to phase separation in SWP films upon addition of 50% SWP, the scratch resistance equals that of the pure protein film.

| Joncryl 8300 | | |
|---|---|---|
| % protein | Scratch resistance | |
| | Casein | SWP |
| 0 | 2 | 2 |
| 10 | 3 | 3 |
| 50 | 3 | 4 |
| 100 | 4 | 4 |
| 1-5; 1 is low scratch resistance, 5 is very high scratch resistance. | | |

## Claims

1. A process for the preparation of a scratch resistant paint formulation and/or formulation having an improved open time, comprising combining a resinous binder, proteinaceous material, conventional additives and a solvent, and dispersing the combination obtained.

2. The process of claim 1, wherein the weight ratio of resinous binder to proteinaceous material is between 1/99 and 95/5.

3. The process of claim 1 or claim 2, wherein proteinaceous material is added in an amount of between 1 and 60 wt.%, preferably between 5 and 20 wt.%, drawn to the weight of the total composition (based on solids).

4. The process of one of the preceding claims, wherein the resinous binder is selected from the group consisting of (meth)acrylates, (meth)acrylics, acrylic resins, copolymers and interpolymers containing (meth)acryl monomers.

5. Paint formulation, comprising
5-80 wt.% of a resinous binder;
1-30 wt.% protein, 20-80 wt.% solvent
0-60 wt.% pigments and fillers; and
0.2-10 wt.% processing acids.

6. Use of proteinaceous material for increasing the scratch resistance of paint films.

7. Use of proteinaceous material for adjusting, and preferably prolonging, the open time of a paint formulation film.

8. Use according to claim 6 or claim 7, wherein the proteinaceous material is based on an industrial protein, and derivatives thereof or based on oligo and polypeptides containing one or more different types of amino acids.
